# EUROPEAN PATENT APPLICATION

(11) **EP 4 717 488 A1**
(43) Date of publication of application: **01.04.2026**
(21) Application number: 24868208.0
(22) Date of filing: 12.09.2024
(51) Int. Cl.: B60K 11/02, B60K 1/04, H01M 10/613, H01M 10/625, H01M 10/6556, H01M 10/6568

(54) **DUMP TRUCK**

(30) Priority: 20.09.2023 JP 2023151855
(71) Applicant: Hitachi Construction Machinery Co., Ltd., Tokyo 110-0015 (JP)
(72) Inventor: MURAYAMA, Yuuji, Tsuchiura-shi, Ibaraki 300-0013 (JP); KANEZAWA, Hiroshi, Tsuchiura-shi, Ibaraki 300-0013 (JP); IKEDA, Jun, Tsuchiura-shi, Ibaraki 300-0013 (JP); NAKATE, Yohei, Tsuchiura-shi, Ibaraki 300-0013 (JP); SAIJO, Kimihiro, Tsuchiura-shi, Ibaraki 300-0013 (JP); KIMURA, Takuya, Tsuchiura-shi, Ibaraki 300-0013 (JP); ABE, Yusuke, Tsuchiura-shi, Ibaraki 300-0013 (JP); HONDA, Takeshi, Tsuchiura-shi, Ibaraki 300-0013 (JP); KANAYA, Yosuke, Tsuchiura-shi, Ibaraki 300-0013 (JP); SUZUKI, Shotaro, Tsuchiura-shi, Ibaraki 300-0013 (JP); SAITO, Kiminori, Tsuchiura-shi, Ibaraki 300-0013 (JP)
(74) Representative: Manitz Finsterwald Patent- und Rechtsanwaltspartnerschaft mbB
(86) International application number: PCT/JP2024/032751
(87) International publication number: WO 2025/063131

(57) **Abstract**

The dump truck (1) includes a vehicle body frame (5) to which front wheels (3) and rear wheels (4) are attached, an travel electric motor (25) driving the rear wheels (4), a battery device (26) mounted on the vehicle body frame (5) supplying electric power to the travel electric motor (25), and electrical equipment including a converter (34) arranged on the rear side of the battery device (26). The battery device (26) is configured to include a battery frame (27) supported by the vehicle body frame (5) and a battery module (33) attached to the battery frame (27). The battery frame (27) is formed with a refrigerant pipe housing section (32) housing a first refrigerant pipe (45) through which refrigerant cooling the battery module (33) flows, and a second refrigerant pipe (50) through which refrigerant cooling the electrical equipment flows.

## Description

### TECHNICAL FIELD

The present disclosure relates to a dump truck suitably used for transporting crushed stone materials excavated in open-pit mines, quarries, and the like.

### BACKGROUND ART

Generally, in open-pit mines and quarries, hydraulic excavators are used to excavate crushed stone materials such as minerals, and the excavated large quantities of crushed stone materials are loaded onto dump trucks and transported to a designated unloading site. A dump truck is configured to include a vehicle body to which front and rear wheels are attached, and a load-carrying platform (vessel) that is pivotally mounted in the vertical direction with the rear side of the vehicle body as a fulcrum.

The dump truck is equipped with a travel electric motor as a power source for rotationally driving the left and right drive wheels. In recent years, dump trucks equipped with batteries instead of generators driven by engines have been proposed, where the travel electric motor is driven by the electric power charged in the battery. The battery of the dump truck is composed of a plurality battery modules to increase the travel distance, and the dump truck is equipped with a cooling system to cool the plurality battery modules and other electrical equipment (Patent document 1).

### PRIOR ART DOCUMENT

### PATENT DOCUMENT

Patent document 1: EP 3480050 A1

### SUMMARY OF THE INVENTION

The cooling system mounted on the aforementioned dump truck has a plurality refrigerant pipes through which refrigerant flows to cool a plurality battery modules. Therefore, the space occupied by the refrigerant pipes increases among the space required for mounting equipment on the vehicle body frame. As a result, the space for mounting additional battery modules is limited, making it difficult to increase the travel distance of the dump truck.

The present invention has been made in view of the problems of the prior art described above, and an object of the present invention is to provide a dump truck in which refrigerant pipes for cooling battery modules and the like are arranged to be compactly mounted on the vehicle body frame.

The dump truck of the present invention includes a vehicle body frame to which wheels are attached, an electric motor for driving the wheels, a battery device mounted on the vehicle body frame for supplying power to the electric motor, and electrical equipment including a converter arranged on the rear side of the battery device. The battery device is configured to include a battery frame supported by the vehicle body frame and a battery module attached to the battery frame. The battery frame is formed with a refrigerant pipe housing section that accommodates a first refrigerant pipe through which refrigerant flows to cool the battery module and a second refrigerant pipe through which refrigerant flows to cool the electrical equipment. The battery frame has a plurality support frames stacked in multi-stages in the vertical direction, and the battery module is attached to each of the plurality support frames, and the refrigerant pipe housing section is formed in at least one of the plurality support frames.

According to the present invention, the plurality battery modules are attached to the battery frame, and the first and second refrigerant pipes are accommodated in the refrigerant pipe housing section formed in the battery frame. As a result, the first and second refrigerant pipes can be compactly accommodated using the battery frame. This reduces the space occupied by the first and second refrigerant pipes, allowing a large number of battery modules to be mounted on the vehicle body frame.

### BRIEF DESCRIPTION OF THE DRAWINGS

[FIG. 1] is a left side view showing a dump truck to which an embodiment of the present invention is applied.
[FIG. 2] is a perspective view showing the vehicle body frame alone.

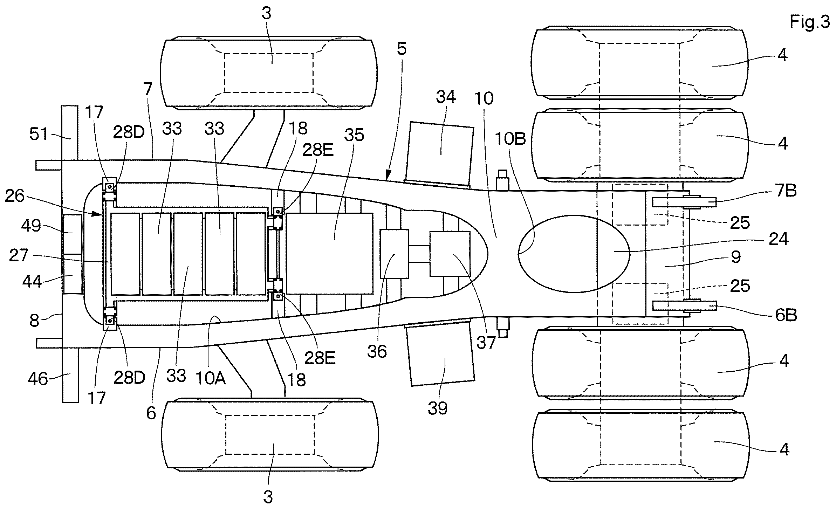

[FIG. 3] is a plan view showing electrical equipment such as a battery mounted on the vehicle body frame.

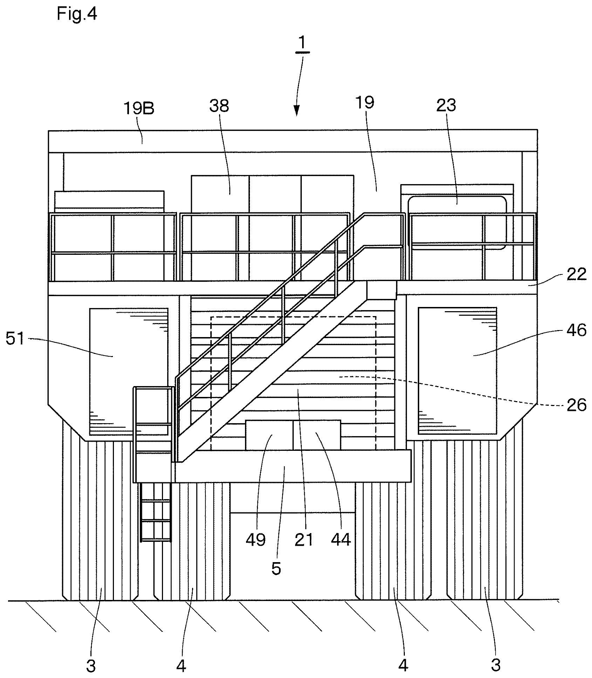

[FIG. 4] is a front view of the dump truck with the current collector removed, viewed from the front.
[FIG. 5] is a perspective view showing the battery device, the first refrigerant pipe, and the second refrigerant pipe.
[FIG. 6] is a perspective view of the battery device, the first refrigerant pipe, and the second refrigerant pipe viewed from below.
[FIG. 7] is a partially broken perspective view showing the first support frame, the first refrigerant pipe, and the second refrigerant pipe.
[FIG. 8] is a left side view showing the connection state between a plurality pipes constituting the first refrigerant pipe and a plurality battery modules.
[FIG. 9] is an explanatory diagram schematically showing the first and second refrigerant pipes from the underside of the vehicle body frame.

### MODE FOR CARRYING OUT THE INVENTION

Hereinafter, an embodiment of the present invention will be described in detail with reference to the accompanying drawings, taking a trolley-type dump truck as an example. In the embodiment, the travel direction of the dump truck is described as the longitudinal direction, and the direction orthogonal to the travel direction is described as the lateral direction.

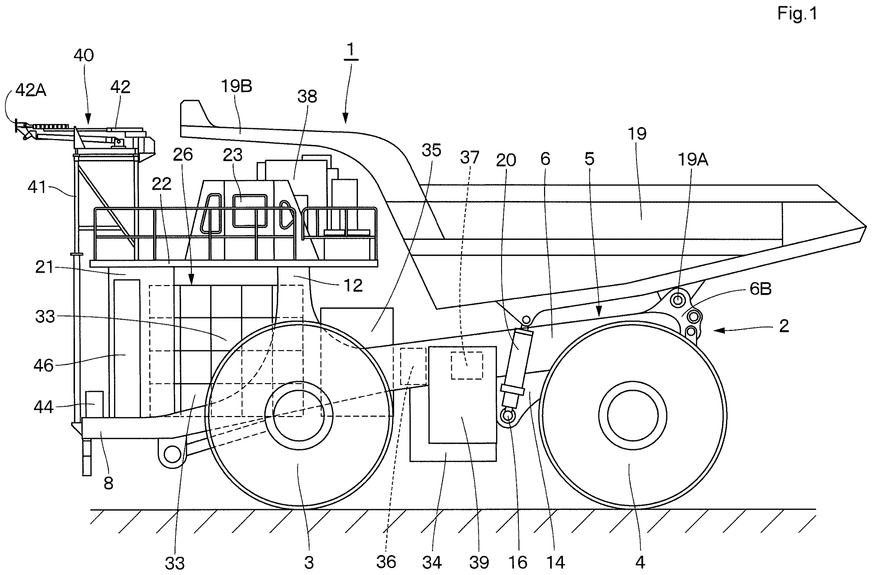

In FIG. 1, the trolley-type dump truck 1 travels by supplying power from a trolley overhead wire installed in a mine or the like to the travel electric motor via a current collector (trolley). The dump truck 1 is configured to include a self-propelled vehicle body 2 equipped with left and right front wheels 3 and left and right rear wheels 4, and a load-carrying platform 19 described later, which is tiltably (vertically movable) mounted on the vehicle body 2. The dump truck 1 loads and transports minerals excavated by a hydraulic excavator or the like (not shown) on the load-carrying platform 19. The vehicle body 2 of the dump truck 1 is configured to include a vehicle body frame 5, a deck 22, a cab 23, and the like, which will be described later.

The left and right front wheels 3 are rotatably attached to the front side of the vehicle body 2, forming steering wheels. The front wheels 3 are supported by the vehicle body frame 5 via the front wheel suspension, and vibrations transmitted from the front wheels 3 to the vehicle body 2 are mitigated. The left and right rear wheels 4 are rotatably attached to the rear side of the vehicle body 2 and are rotationally driven by a travel device 24 equipped with a travel electric motor 25, which will be described later. The travel device 24 of the rear wheels 4 is attached to the vehicle body frame 5 via the rear wheel suspension, and vibrations transmitted from the rear wheels 4 to the vehicle body 2 are mitigated.

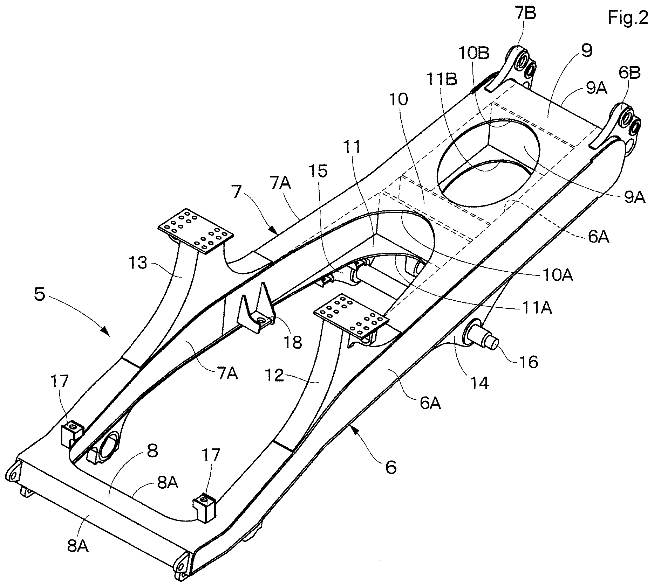

The vehicle body frame 5 serves as the base of the vehicle body 2 and consists of a robust support structure extending in the longitudinal direction. As shown in FIG. 2, the vehicle body frame 5 is configured to include a left frame 6, a right frame 7, a front frame 8, a rear frame 9, an upper plate 10, a lower plate 11, and the like, which will be described later.

The left frame 6 is arranged on the left side of the vehicle body frame 5. The left frame 6 is configured to include left and right side plates 6A facing each other in the lateral direction, an upper plate 10 closing the upper ends of the left and right side plates 6A, and a lower plate 11 connecting the lower ends of the left and right side plates 6A, and has a box structure with a rectangular cross-section extending in the longitudinal direction. The right frame 7 is arranged on the right side of the vehicle body frame 5. The right frame 7 is configured to include left and right side plates 7A facing each other in the lateral direction, an upper plate 10 closing the upper ends of the left and right side plates 7A, and a lower plate 11 connecting the lower ends of the left and right side plates 7A, and has a box structure with a rectangular cross-section extending in the longitudinal direction.

The left frame 6 and the right frame 7 extend in the longitudinal direction while facing each other with a gap in the lateral direction, and the lateral gap between the left frame 6 and the right frame 7 is set larger on the front side compared to the rear side of the vehicle body frame 5. A left rear end bracket 6B is installed at the rear end of the left frame 6, and a right rear end bracket 7B is installed at the rear end of the right frame 7, and these left rear end bracket 6B and right rear end bracket 7B face each other in the lateral direction.

The front frame 8 is arranged on the front side of the vehicle body frame 5. The front frame 8 has a box structure extending in the lateral direction, including front and rear side plates 8A facing each other in the longitudinal direction, an upper plate 10, and a lower plate 11, and connects the front ends of the left frame 6 and the right frame 7. The rear frame 9 is arranged on the rear side of the vehicle body frame 5. The rear frame 9 has a box structure extending in the lateral direction, including front and rear side plates 9A facing each other in the longitudinal direction, an upper plate 10, and a lower plate 11, and connects the rear ends of the left frame 6 and the right frame 7.

The upper plate 10 is installed at the upper ends of the left frame 6, right frame 7, front frame 8, and rear frame 9. The upper plate 10 closes the upper ends of the left frame 6, right frame 7, front frame 8, and rear frame 9, and connects between the left frame 6 and the right frame 7. The upper plate 10 is formed with a front opening 10A and a rear opening 10B, positioned between the left frame 6 and the right frame 7.

The lower plate 11 is installed at the lower ends of the left frame 6, right frame 7, front frame 8, and rear frame 9, facing the upper plate 10 in the vertical direction. The lower plate 11 closes the lower ends of the left frame 6, right frame 7, front frame 8, and rear frame 9, and connects between the left frame 6 and the right frame 7. The lower plate 11 has a front opening 11A and a rear opening 11B formed at positions corresponding to the front opening 10A and rear opening 10B of the upper plate 10.

The left pillar 12 and right pillar 13 are formed at positions closer to the front from the central part in the longitudinal direction of the vehicle body frame 5, facing each other in the lateral direction. The left pillar 12 and right pillar 13 each have a hollow box structure shaped like a mountain. The left pillar 12 protrudes upward from the upper plate 10 constituting the left frame 6, and the right pillar 13 protrudes upward from the upper plate 10 constituting the right frame 7. A deck 22 and the like are attached to the upper ends of the left pillar 12 and right pillar 13.

The left cylinder bracket 14 and right cylinder bracket 15 are installed at positions closer to the rear from the middle part in the longitudinal direction of the vehicle body frame 5, facing each other in the lateral direction. The left cylinder bracket 14 protrudes downward from the lower plate 11 constituting the left frame 6, and the right cylinder bracket 15 protrudes downward from the lower plate 11 constituting the right frame 7. A cylinder support shaft 16 extending in the lateral direction is inserted through the lower end sides of the left cylinder bracket 14 and right cylinder bracket 15. The lower end side of the hoist cylinder 20, which will be described later, is attached to both ends in the lateral direction of the cylinder support shaft 16.

Near the left front corner where the left frame 6 and front frame 8 intersect, and near the right front corner where the right frame 7 and front frame 8 intersect, left and right front brackets 17 are installed. These left and right front brackets 17 face each other in the lateral direction across the front opening 10A of the upper plate 10, and the left and right front extension plates 28D of the battery frame 27, which will be described later, are attached. Also, left and right rear brackets 18, which are positioned behind the left and right front brackets 17, are installed on the left frame 6 and right frame 7. These left and right rear brackets 18 face each other in the lateral direction across the front opening 10A of the upper plate 10, and the left and right rear extension plates 28E of the battery frame 27 are attached.

The load-carrying platform (vessel) 19 is tiltably (vertically movable) mounted on the vehicle body frame 5. The load-carrying platform 19 is formed as a large bottomed container for loading crushed stone materials such as minerals excavated by a hydraulic excavator. The rear bottom of the load-carrying platform 19 is tiltably connected to the left rear end bracket 6B of the left frame 6 and the right rear end bracket 7B of the right frame 7 via a connecting pin 19A. On the front side of the load-carrying platform 19, an eaves section 19B extending horizontally forward from the top is integrally formed. The eaves section 19B of the load-carrying platform 19 extends to the front end side of the deck 22, covering the cab 23 from above.

The hoist cylinder 20 is mounted in pairs in the lateral direction between the vehicle body frame 5 and the load-carrying platform 19 (only the left side is shown). The hoist cylinder 20 consists of, for example, a hydraulic cylinder, and tilts the front side of the load-carrying platform 19 up and down relative to the vehicle body frame 5. One end side (lower end side) of the hoist cylinder 20 is attached to the cylinder support shaft 16, and the other end side (upper end side) of the hoist cylinder 20 is attached to the lower surface side of the load-carrying platform 19. Therefore, by extending the hoist cylinder 20, the front side (eaves section 19B side) of the load-carrying platform 19 is lifted upward around the connecting pin 19A, allowing the minerals and other materials loaded on the load-carrying platform 19 to be discharged rearward.

The front support member 21 is installed on the front end side of the vehicle body frame 5. The front support member 21 is formed in a frame shape surrounded by left and right side plates and a front plate (grill), and a battery device 26 and the like are housed inside the front support member 21. The front support member 21, together with the left pillar 12 and right pillar 13 of the vehicle body frame 5, also serves to support the deck 22 and the like from below.

The deck 22 is positioned in front of the load-carrying platform 19 and installed on the upper side of the front support member 21. The deck 22 is formed in a long rectangular flat plate shape in the lateral direction and extends horizontally while being supported from below by the left pillar 12, right pillar 13, and front support member 21 of the vehicle body frame 5. The cab 23, a control cabinet 38 described later, and the like are mounted on the deck 22, and the upper surface of the deck 22 serves as a flat passage surface for operators and others to pass through.

The cab 23 is installed on the upper left side of the deck 22, defining an operating room for the operator to board. Inside the cab 23, an operator's seat, a steering handle, a start switch, an accelerator pedal, a brake pedal, and control levers (all not shown) are installed.

On the rear side of the vehicle body frame 5, a travel device 24 for the rear wheels is installed. The travel device 24 is attached to the vehicle body frame 5 via a suspension device for the rear wheels. The travel device 24 is equipped with left and right travel electric motors 25, and the rotation of these left and right travel electric motors 25 is transmitted to the left and right rear wheels 4 via a reduction mechanism (not shown).

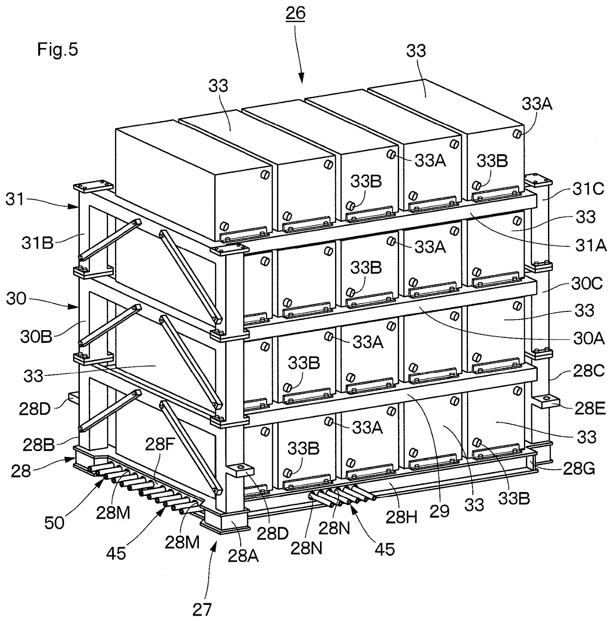

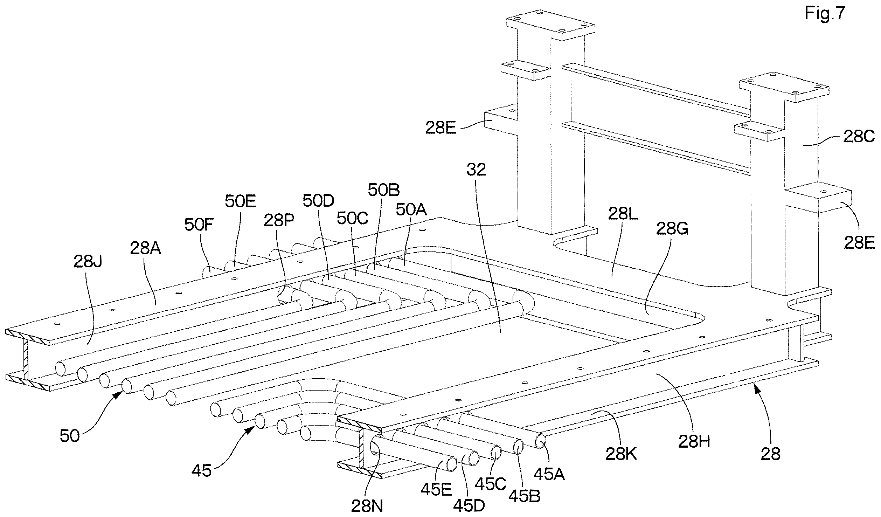

Next, the battery device 26 mounted on the vehicle body frame 5 will be described with reference to FIGS. 5 to 7.

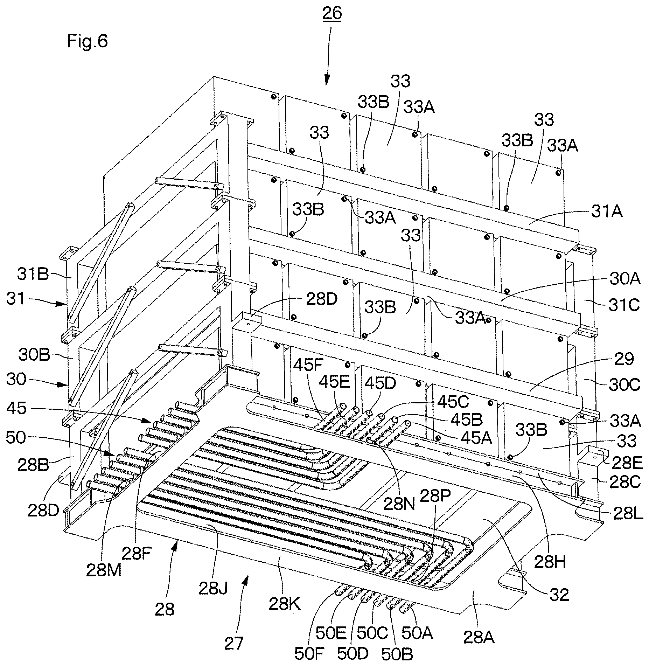

The battery device 26 is located below the deck 22 and mounted on the front side part of the vehicle body frame 5. The battery device 26 stores electric power supplied to electrical equipment mounted on the dump truck 1, such as the travel electric motor 25. As shown in FIGS. 5 and 6, the battery device 26 is configured to include a multi-stage battery frame 27 and a plurality of battery modules 33. The battery frame 27 has a plurality of support frame bodies stacked in the vertical direction and is supported by the vehicle body frame 5. The plurality of battery modules 33 are individually attached to the support frame bodies of the battery frame 27.

The battery frame 27 includes a first support frame body 28 arranged at the lowest level, a second support frame body 29 detachably attached above the first support frame body 28, a third support frame body 30 detachably attached above the second support frame body 29, and a fourth support frame body 31 detachably attached above the third support frame body 30. Thus, the battery frame 27 has four stages of support frame bodies (first support frame body 28, second support frame body 29, third support frame body 30, fourth support frame body 31) stacked in the vertical direction.

The first support frame body 28 as the lowermost support frame body is configured to include a frame body 28A forming a rectangular frame shape extending in the longitudinal direction, left and right front leg parts 28B arranged at the front end of the frame body 28A, and left and right rear leg parts 28C arranged at the rear end of the frame body 28A. A plurality of battery modules 33 are mounted in the longitudinal direction on the frame body 28A. In the middle part in the vertical direction of the left and right front leg parts 28B, front extension plates 28D extending in the lateral direction from the front leg parts 28B are formed. These left and right front extension plates 28D are attached to the left and right front brackets 17 of the vehicle body frame 5. In the middle part in the vertical direction of the left and right rear leg parts 28C, rear extension plates 28E extending in the lateral direction from the rear leg parts 28C are formed. These left and right rear extension plates 28E are attached to the left and right rear brackets 18 of the vehicle body frame 5.

The frame body 28A of the first support frame 28 is formed in a rectangular frame shape by the front plate 28F, rear plate 28G, left plate 28H, right plate 28J, bottom plate 28K, and top plate 28L. The front plate 28F and the rear plate 28G face each other with a gap in the longitudinal direction, and the left plate 28H and the right plate 28J face each other with a gap in the lateral direction. A frame-shaped bottom plate 28K is fixed to the lower ends of the front plate 28F, rear plate 28G, left plate 28H, and right plate 28J. A frame-shaped top plate 28L is fixed to the upper ends of the front plate 28F, rear plate 28G, left plate 28H, and right plate 28J. The bottom plate 28K and the top plate 28L face each other in the vertical direction.

The second support frame 29 is formed in a rectangular frame shape extending in the longitudinal direction, similar to the frame body 28A of the first support frame 28. The second support frame 29 is detachably mounted on the first support frame 28 using fasteners such as bolts. A plurality battery modules 33 are mounted in a row in the longitudinal direction on the second support frame 29.

The third support frame 30 is composed of a frame body 30A forming a rectangular frame shape extending in the longitudinal direction, left and right front leg parts 30B arranged at the front end of the frame body 30A, and left and right rear leg parts 30C arranged at the rear end of the frame body 30A. The lower ends of the left and right front leg parts 30B are detachably mounted on the upper ends of the front leg parts 28B of the first support frame 28 using fasteners such as bolts. The lower ends of the left and right rear leg parts 30C are detachably mounted on the upper ends of the rear leg parts 28C of the first support frame 28 using fasteners such as bolts. Thus, the third support frame 30 is arranged on the second support frame 29, and The plurality battery modules 33 are mounted in a row in the longitudinal direction on the frame body 30A.

The fourth support frame 31 is composed of a frame body 31A forming a rectangular frame shape extending in the longitudinal direction, left and right front leg parts 31B arranged at the front end of the frame body 31A, and left and right rear leg parts 31C arranged at the rear end of the frame body 31A. The lower ends of the left and right front leg parts 31B are detachably mounted on the upper ends of the front leg parts 30B of the third support frame 30 using fasteners such as bolts . The lower ends of the left and right rear leg parts 31C are detachably mounted on the upper ends of the rear leg parts 30C of the third support frame 30 using fasteners such as bolts. Thus, the fourth support frame 31 is arranged on the third support frame 30, and the plurality battery modules 33 are mounted in a row in the longitudinal direction on the frame body 31A.

The refrigerant pipe housing section 32 is formed inside the frame body 28A of the first support frame 28. Specifically, the refrigerant pipe housing section 32 is configured as a rectangular space surrounded by the front plate 28F, rear plate 28G, left plate 28H, and right plate 28J that constitute the frame body 28A. The refrigerant pipe housing section 32 of the battery frame 27 accommodates a plurality pipes constituting the first refrigerant pipe 45 and a plurality pipes constituting the second refrigerant pipe 50, which will be described later. A plurality pipe insertion holes 28M are formed in a row in the lateral direction on the front plate 28F of the frame body 28A. A plurality pipe insertion holes 28N are formed in a row in the longitudinal direction on the left plate 28H, and a plurality pipe insertion holes 28P are formed in a row in the longitudinal direction on the right plate 28J. A plurality pipes constituting the first refrigerant pipe 45 and a plurality pipes constituting the second refrigerant pipe 50 are mounted on the first support frame 28 in a state where they are inserted through these pipe insertion holes 28M, 28N, 28P.

The plurality battery modules 33 are individually mounted on the battery frame 27. The battery module 33 consists of rechargeable batteries such as lithium-ion batteries and is formed in a block shape extending in the lateral direction. These plurality battery modules 33 supply power to electrical devices such as the travel electric motor 25.

For example, five battery modules 33 are detachably mounted on each of the first support frame 28, second support frame 29, third support frame 30, and fourth support frame 31 using fasteners such as bolts. Thus, a large-capacity battery device 26 is configured by aggregating a large number of battery modules 33 (e.g., a total of 20) into a single battery frame 27. The left and right front extension plates 28D of the battery frame 27 (first support frame 28) are mounted on the front bracket 17 of the vehicle body frame 5, and the left and right rear extension plates 28E are mounted on the rear bracket 18 of the vehicle body frame 5. Thus, the battery device 26 is supported by the vehicle body frame 5 in a state where it is arranged between the left frame 6 and the right frame 7.

Here, the battery module 33 generates heat by charging and discharging electric power. Therefore, a water jacket (not shown) through which a refrigerant such as cooling water flows is installed inside the battery module 33. Each battery module 33 is equipped with a refrigerant inlet 33A for the inflow of refrigerant into the water jacket and a refrigerant outlet 33B for the outflow of refrigerant from the water jacket. The refrigerant inlets 33A installed in these plurality battery modules 33 are connected to supply side pipes 45A, 45C, 45E, which will be described later, and the refrigerant outlets 33B are connected to discharge side pipes 45B, 45D, 45F, which will be described later.

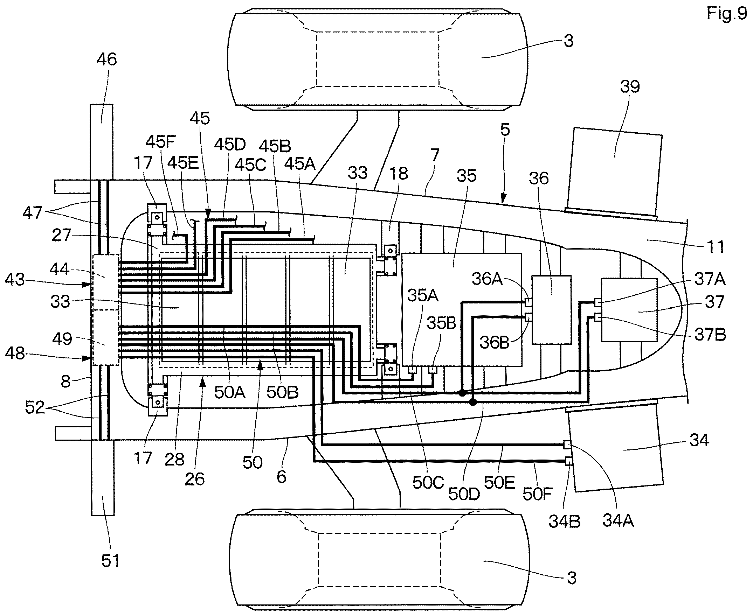

On the rear side of the battery device 26, electrical devices such as a converter 34, reactor 35, hydraulic pump drive motor 36, and pump drive inverter 37 are arranged. The converter 34 is positioned between the right front wheel 3 and the rear wheel 4 and is mounted on the right frame 7 of the vehicle body frame 5. The converter 34 is a DC/DC converter that converts the voltage of the direct current power supplied from the battery device 26 to the travel electric motor 25. The converter 34 has a water jacket (not shown) through which cooling water flows, a refrigerant inlet 34A for the inflow of cooling water, and a refrigerant outlet 34B for the outflow of cooling water (see Fig. 9).

The reactor 35 is positioned on the rear side of the battery device 26 and is mounted between the left frame 6 and the right frame 7 of the vehicle body frame 5. The reactor 35 is electrically connected between the battery device 26 and the converter 34 and is equipped with an LC filter for removing high-frequency noise and a circuit breaker for protecting the battery device 26. The reactor 35 has a water jacket (not shown) through which cooling water flows, a refrigerant inlet 35A for the inflow of cooling water, and a refrigerant outlet 35B for the outflow of cooling water.

The hydraulic pump drive motor 36 is positioned on the rear side of the reactor 35 and is mounted between the left frame 6 and the right frame 7 of the vehicle body frame 5. The hydraulic pump drive motor 36 is an electric motor that drives a hydraulic pump (not shown) using electric power from the battery device 26. Thus, hydraulic oil from the hydraulic pump is supplied to hydraulic equipment such as the hoist cylinder 20 and power steering device (not shown). The hydraulic pump drive motor 36 has a water jacket (not shown) through which cooling water flows, a refrigerant inlet 36A for the inflow of cooling water, and a refrigerant outlet 36B for the outflow of cooling water.

The pump drive inverter 37 is positioned on the rear side of the hydraulic pump drive motor 36 and is mounted between the left frame 6 and the right frame 7 of the vehicle body frame 5. The pump drive inverter 37 controls the power supplied to the hydraulic pump drive motor 36 and controls the operation of the hydraulic pump drive motor 36. The pump drive inverter 37 has a water jacket (not shown) through which cooling water flows, a refrigerant inlet 37A for the inflow of cooling water, and a refrigerant outlet 37B for the outflow of cooling water.

The control cabinet 38 is mounted on the upper side of the deck 22, alongside the right side of the cab 23. The control cabinet 38 is configured to include an inverter and other components that control the travel electric motor 25. The hydraulic fluid tank 39 is attached to the left frame 6, which constitutes the vehicle body frame 5. The hydraulic fluid tank 39 is positioned between the left front wheel 3 and rear wheel 4, mounted on the left frame 6, and stores hydraulic fluid supplied to hydraulic equipment such as the hoist cylinder 20 mounted on the vehicle body frame 5.

The current collector 40 is mounted on the pantograph support 41, which is installed at the front end of the vehicle body frame 5 (see Fig. 1) . The current collector 40 gathers electric power from trolley overhead wires (not shown) installed along the travel path of the dump truck 1 in mines, etc., and supplies it to the travel electric motor 25, battery device 26, and others. The current collector 40 includes a pantograph 42, which is extendably mounted between the pantograph support 41 and the trolley overhead wire, and a collector head 42A that slides against the trolley overhead wire when the pantograph 42 extends.

Next, the first cooling system 43 for cooling each battery module 33 of the battery device 26 and the second cooling system 48 for cooling electrical equipment (converter 34, reactor 35, hydraulic pump drive motor 36, pump drive inverter 37) located at the rear side of the battery device 26 will be described.

The first cooling system 43 cools the plurality battery modules 33 that constitute the battery device 26. The first cooling system 43 is configured to include a cooling water tank 44, a cooling water pump (not shown), a first refrigerant pipe 45, and a left radiator 46.

The cooling water tank 44 is positioned in front of the front support member 21 and mounted at the front end of the vehicle body frame 5. The cooling water tank 44 stores cooling water that is supplied to the water jackets of the plurality battery modules 33. The plurality battery modules 33 (water jackets) and the cooling water tank 44 are connected via the first refrigerant pipe 45. The left radiator 46 is positioned adjacent to the left side of the front support member 21, under the deck 22. The cooling water tank 44 and the left radiator 46 are connected via a radiator pipe 47, with a circulation pump (not shown) installed along the radiator pipe 47.

The cooling water pump constituting the first cooling system 43 discharges cooling water stored in the cooling water tank 44 and supplies it to the refrigerant inlet 33A of the battery module 33 through the first refrigerant pipe 45. The cooling water supplied to the water jacket of the battery module 33 from the refrigerant inlet 33A cools the battery module 33 and then returns to the cooling water tank 44 through the first refrigerant pipe 45 from the refrigerant outlet 33B. Meanwhile, the cooling water stored in the cooling water tank 44 is supplied to the left radiator 46 by the circulation pump and returns to the cooling water tank 44 in a heat-dissipated state by the left radiator 46. In this manner, during the operation of the dump truck 1, the plurality battery modules 33 constituting the battery device 26 are cooled by the first cooling system 43.

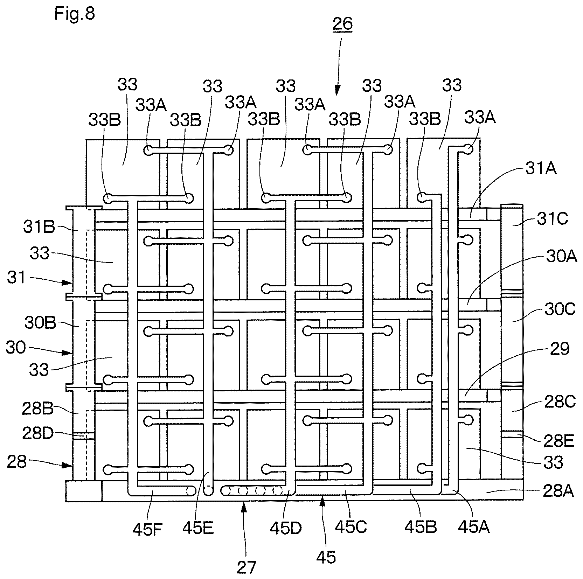

As shown in Figures 6 to 9, the first refrigerant pipe 45 is composed of an assembly of the plurality pipes. Specifically, the first refrigerant pipe 45 is composed of three supply side pipes 45A, 45C, 45E and three discharge side pipes 45B, 45D, 45F. One end (front end) of the supply side pipe 45A is connected to the cooling water tank 44. The other end (rear end) of the supply side pipe 45A is connected to the refrigerant inlet 33A of the four battery modules 33, which are positioned furthest to the rear among the plurality battery modules 33 mounted on the battery frame 27. One end of the discharge side pipe 45B is connected to the cooling water tank 44. The other end of the discharge side pipe 45B is connected to the refrigerant outlet 33B of the four battery modules 33, which are positioned furthest to the rear among the plurality battery modules 33.

One end of the supply side pipe 45C is connected to the cooling water tank 44. The other end of the supply side pipe 45C is connected to the refrigerant inlet 33A of the eight battery modules 33, which are positioned second and third from the rear among the plurality battery modules 33. One end of the discharge side pipe 45D is connected to the cooling water tank 44. The other end of the discharge side pipe 45D is connected to the refrigerant outlet 33B of the eight battery modules 33, which are positioned second and third from the rear among the plurality battery modules 33.

One end of the supply side pipe 45E is connected to the cooling water tank 44. The other end of the supply side pipe 45E is connected to the refrigerant inlet 33A of the eight battery modules 33, which are positioned fourth and fifth from the rear among the plurality battery modules 33. One end of the discharge side pipe 45F is connected to the cooling water tank 44. The other end of the discharge side pipe 45F is connected to the refrigerant outlet 33B of the eight battery modules 33, which are positioned fourth and fifth from the rear among the plurality battery modules 33.

Thus, the cooling water stored in the cooling water tank 44 is supplied to the refrigerant inlet 33A of the battery module 33 through the supply side pipes 45A, 45C, 45E, cooling the battery module 33 as it flows through the water jacket. The cooling water that has cooled the battery module 33 returns to the cooling water tank 44 from the refrigerant outlet 33B of the battery module 33 through the discharge side pipes 45B, 45D, 45F. The cooling water that has returned to the cooling water tank 44 is supplied again to the battery module 33 in a heat-dissipated state by the left radiator 46.

Here, the intermediate portions of the supply side pipes 45A, 45C, 45E, and discharge side pipes 45B, 45D, 45F constituting the first refrigerant pipe 45 are housed within the refrigerant pipe housing section 32 formed inside the first support frame 28 that constitutes the battery frame 27. The intermediate portions of the supply side pipes 45A, 45C, 45E, and discharge side pipes 45B, 45D, 45F are bent in an inverted L-shape when viewed from above. One end side of the supply side pipes 45A, 45C, 45E, and discharge side pipes 45B, 45D, 45F extends from the cooling water tank 44 through the pipe insertion hole 28M formed in the front side plate 28F of the first support frame 28 (frame body 28A) into the refrigerant pipe housing section 32. The other end side of the supply side pipes 45A, 45C, 45E, and discharge side pipes 45B, 45D, 45F bends to the left within the refrigerant pipe housing section 32 and extends outside the refrigerant pipe housing section 32 through the pipe insertion hole 28N formed in the left side plate 28H of the first support frame 28 (frame body 28A).

The intermediate portions of the supply side pipes 45A, 45C, 45E, and discharge side pipes 45B, 45D, 45F constituting the first refrigerant pipe 45 are mounted on the first support frame 28 in a state where they are inserted through the pipe insertion hole 28M formed in the front side plate 28F and the pipe insertion hole 28N formed in the left side plate 28H. Thus, the supply side pipes 45A, 45C, 45E, and discharge side pipes 45B, 45D, 45F are compactly housed in the refrigerant pipe housing section 32, surrounded by the front side plate 28F, rear side plate 28G, left side plate 28H, and right side plate 28J of the first support frame 28, in a state where they are arranged in parallel in the horizontal direction.

The second cooling system 48 cools electrical equipment located at the rear side of the battery device 26, namely the converter 34, reactor 35, hydraulic pump drive motor 36, pump drive inverter 37, and others. The second cooling system 48 is configured to include a cooling water tank 49, a cooling water pump (not shown), a second refrigerant pipe 50, and a right radiator 51.

The cooling water tank 49 is mounted at the front end of the vehicle body frame 5, adjacent to the cooling water tank 44 that constitutes the first cooling system 43. The cooling water tank 49 stores cooling water supplied to the converter 34, reactor 35, hydraulic pump drive motor 36, and pump drive inverter 37. The converter 34, reactor 35, hydraulic pump drive motor 36, and pump drive inverter 37 are each connected to the cooling water tank 49 via the second refrigerant pipe 50. The right radiator 51 is positioned adjacent to the right side of the front support member 21, beneath the deck 22. The cooling water tank 49 and the right radiator 51 are connected via the radiator pipe 52, with a circulation pump (not shown) installed along the radiator pipe 52.

The cooling water pump constituting the second cooling system 48 discharges the cooling water stored in the cooling water tank 49. This cooling water is supplied through the second refrigerant pipe 50 to the converter 34, reactor 35, hydraulic pump drive motor 36, and pump drive inverter 37, and after cooling these components, it returns to the cooling water tank 49 via the second refrigerant pipe 50. Meanwhile, the cooling water stored in the cooling water tank 49 is supplied to the right radiator 51 by the circulation pump and returns to the cooling water tank 49 after being dissipated by the right radiator 51. In this manner, during the operation of the dump truck 1, the converter 34, reactor 35, hydraulic pump drive motor 36, and pump drive inverter 37, which are positioned behind the battery device 26, are cooled by the second cooling system 48.

The second refrigerant pipe 50 is composed of an assembly of a plurality pipes. Specifically, the second refrigerant pipe 50 consists of three supply side pipes 50A, 50C, 50E, and three discharge side pipes 50B, 50D, 50F. One end (front end) of the supply side pipe 50A is connected to the cooling water tank 49. The other end (rear end) of the supply side pipe 50A is connected to the refrigerant inlet 35A of the reactor 35 (water jacket). One end of the discharge side pipe 50B is connected to the cooling water tank 49. The other end of the discharge side pipe 50B is connected to the refrigerant outlet 35B of the reactor 35.

One end of the supply side pipe 50C is connected to the cooling water tank 49. The other end of the supply side pipe 50C is connected to the refrigerant inlet 36A of the hydraulic pump drive motor 36 and the refrigerant inlet 37A of the pump drive inverter 37. One end of the discharge side pipe 50D is connected to the cooling water tank 49. The other end of the discharge side pipe 50D is connected to the refrigerant outlet 36B of the hydraulic pump drive motor 36 and the refrigerant outlet 37B of the pump drive inverter 37. One end of the supply side pipe 50E is connected to the cooling water tank 49. The other end of the supply side pipe 50E is connected to the refrigerant inlet 34A of the converter 34. One end of the discharge side pipe 50F is connected to the cooling water tank 49. The other end of the discharge side pipe 50F is connected to the refrigerant outlet 37B of the converter 34.

Thus, the cooling water stored in the cooling water tank 49 is supplied through the supply side pipes 50A, 50C, 50E to the refrigerant inlets 35A, 36A, 37A, 34A of the reactor 35, hydraulic pump drive motor 36, pump drive inverter 37, and converter 34. The cooling water cools these components as it flows through the water jackets of the reactor 35, hydraulic pump drive motor 36, pump drive inverter 37, and converter 34, and returns to the cooling water tank 49 through the discharge side pipes 50B, 50D, 50F from the refrigerant outlets 35B, 36B, 37B, 34B. The cooling water that returns to the cooling water tank 49 is supplied again to the reactor 35, hydraulic pump drive motor 36, pump drive inverter 37, and converter 34 after being dissipated by the right radiator 51.

Here, the intermediate portions of the supply side pipes 50A, 50C, 50E, and discharge side pipes 50B, 50D, 50F that constitute the second refrigerant pipe 50 are housed within the refrigerant pipe housing section 32 of the battery frame 27 (first support frame 28), similar to the first refrigerant pipe 45. The intermediate portions of the supply side pipes 50A, 50C, 50E, and discharge side pipes 50B, 50D, 50F are bent in an L-shape when viewed from above. One end side of the supply side pipes 50A, 50C, 50E, and discharge side pipes 50B, 50D, 50F extends from the cooling water tank 49 through the pipe insertion hole 28M formed in the front side plate 28F of the first support frame 28 (frame body 28A) into the refrigerant pipe housing section 32. The other end side of the supply side pipes 50A, 50C, 50E, and discharge side pipes 50B, 50D, 50F bends to the right within the refrigerant pipe housing section 32 and extends to the outside of the refrigerant pipe housing section 32 through the pipe insertion hole 28P formed in the right side plate 28J of the first support frame 28 (frame body 28A).

The intermediate portions of the supply side pipes 50A, 50C, 50E, and discharge side pipes 50B, 50D, 50F that constitute the second refrigerant pipe 50 are attached to the first support frame 28 in a state where they are inserted through the pipe insertion hole 28M formed in the front side plate 28F and the pipe insertion hole 28P formed in the right side plate 28J of the first support frame 28. As a result, the supply side pipes 50A, 50C, 50E, and discharge side pipes 50B, 50D, 50F are compactly housed in a parallel arrangement in the horizontal direction within the refrigerant pipe housing section 32, which is enclosed by the front side plate 28F, rear side plate 28G, left side plate 28H, and right side plate 28J of the first support frame 28. By utilizing the battery frame 27 that aggregates the plurality battery modules 33 in this manner, the second refrigerant pipe 50 can be compactly housed.

The dump truck 1 according to this embodiment has the above-described configuration, and the following describes the operation of transporting minerals excavated in a mine using the dump truck 1.

The dump truck 1 loads minerals excavated by a hydraulic excavator onto the load-carrying platform 19 in the loading area and transports the minerals to a dumping area located away from the loading area for unloading (dumping) . Generally, the loading area and the dumping area are flat roads, and the dumping area is set at a higher position than the loading area. Therefore, the travel path from the loading area to the dumping area becomes an uphill road (incline). The dump truck 1, for example, drives the travel electric motor 25 with electric power from the trolley overhead wire when traveling on an uphill road, and drives the travel electric motor 25 with electric power from the battery device 26 when traveling on a road without a trolley overhead wire, such as a flat road.

First, the dump truck 1 loads minerals excavated by a hydraulic excavator (not shown) onto the load-carrying platform 19 in the loading area. Since the loading area is usually on a flat road that does not require large electric power, the travel electric motor 25 is driven by electric power from the battery device 26, and the dump truck 1 travels on the flat road within the loading area.

When the dump truck 1 travels on an uphill road from the loading area to the dumping area, the pantograph 42 of the current collector 40 mounted at the front end of the vehicle body frame 5 is extended to make sliding contact with the trolley overhead wire installed on the uphill road. As a result, the travel electric motor 25 is driven by electric power from the trolley overhead wire, and the dump truck 1 travels on the uphill road toward the dumping area.

When the dump truck 1 traveling on an uphill road reaches the unloading area, since the unloading area is a flat road, the dump truck 1 travels within the unloading area using electric power from the battery device 26. The dump truck 1 that has reached the unloading area drives a hydraulic pump (not shown) with the hydraulic pump drive motor 36, and extends the hoist cylinder 20 with the pressure oil discharged from the hydraulic pump. As a result, the load-carrying platform 19 tilts around the connecting pin 19A, allowing the minerals loaded on the load-carrying platform 19 to be discharged into the unloading area.

After discharging the minerals loaded on the load-carrying platform 19 into the unloading area, the dump truck 1 travels towards the loading area to load new minerals. Since the unloading area is at a higher position than the loading area, the travel path from the unloading area to the loading area becomes a downhill road. Since a large amount of electric power is not required on the downhill road, the travel electric motor 25 is driven by electric power from the battery device 26, and the dump truck 1 travels on the downhill road towards the loading area.

In this way, the dump truck 1 travels between the loading area and the unloading area while appropriately selecting electric power from the trolley overhead wire and the battery device 26 according to the road surface. Then, the dump truck 1 repeatedly transports the minerals loaded on the load-carrying platform 19 in the loading area to the unloading area and discharges them into the unloading area.

The dump truck 1 according to this embodiment includes a first refrigerant pipe 45 through which a refrigerant (cooling water) flows to cool each battery module 33 of the battery device 26, and a second refrigerant pipe 50 through which a refrigerant (cooling water) flows to cool the electrical equipment (converter 34, reactor 35, hydraulic pump drive motor 36, pump drive inverter 37) arranged on the rear side of the battery device 26. A refrigerant pipe housing section 32 is formed in the battery frame 27 that constitutes the battery device 26. The refrigerant pipe housing section 32 houses the supply side pipes 45A, 45C, 45E and discharge side pipes 45B, 45D, 45F that constitute the first refrigerant pipe 45, and the supply side pipes 50A, 50C, 50E and discharge side pipes 50B, 50D, 50F that constitute the second refrigerant pipe 50. By utilizing the battery frame 27 that the plurality battery modules 33 are attached in this manner, the first refrigerant pipe 45 and the second refrigerant pipe 50 can be compactly housed. As a result, the space occupied by the first refrigerant pipe 45 and the second refrigerant pipe 50 mounted on the vehicle body frame 5 can be reduced, allowing a large number of battery modules 33 to be mounted on the vehicle body frame 5.

In this case, the supply side pipes 45A, 45C, 45E and discharge side pipes 45B, 45D, 45F of the first refrigerant pipe 45, and the supply side pipes 50A, 50C, 50E and discharge side pipes 50B, 50D, 50F of the second refrigerant pipe 50 are housed in the refrigerant pipe housing section 32, which is enclosed by the front side plate 28F, rear side plate 28G, left side plate 28H, and right side plate 28J of the first support frame 28, in a state where they are arranged in parallel in the horizontal direction. Therefore, the vertical space of the refrigerant pipe housing section 32 can be reduced, the overall height dimension of the battery device 26 can be kept small, and the stability of the dump truck 1 during travel can be enhanced.

Moreover, the refrigerant pipe housing section 32 is formed inside the first support frame 28, which is located at the lowest level of the battery frame 27. The first support frame 28 includes front side plate 28F, rear side plate 28G, left side plate 28H, and right side plate 28J, which face each other in the horizontal direction with a gap, and has high rigidity. Therefore, even if pipe insertion holes 28M, 28N, and 28P are formed in the front side plate 28F, left side plate 28H, and right side plate 28J, respectively, to insert a plurality supply side pipes and discharge side pipes that constitute the first refrigerant pipe 45 and the second refrigerant pipe 50, the strength of the battery frame 27 can be ensured.

Thus, the dump truck 1 according to the embodiment includes a vehicle body frame 5 to which the front wheels 3 and rear wheels 4 are attached, a travel electric motor 25 that drives the rear wheels 4, a battery device 26 mounted on the vehicle body frame 5 that supplies electric power to the travel electric motor 25, and electrical equipment including a converter 34 arranged on the rear side of the battery device 26. The battery device 26 is configured to include a battery frame 27 supported by the vehicle body frame 5 and the plurality battery modules 33 attached to the battery frame 27. The battery frame 27 is formed with a refrigerant pipe housing section 32 that houses a first refrigerant pipe 45 through which a refrigerant flows to cool the battery modules 33, and a second refrigerant pipe 50 through which a refrigerant flows to cool the electrical equipment. Furthermore, the battery frame 27 has the plurality support frames (first support frame 28, second support frame 29, third support frame 30, fourth support frame 31) stacked in multi-stages in the vertical direction. The battery modules 33 are attached to each of the a plurality support frames, and the refrigerant pipe housing section 32 is formed in at least one of the plurality support frames.

According to this configuration, the plurality battery modules 33 are attached to the battery frame 27, and the first refrigerant pipe 45 and the second refrigerant pipe 50 are housed in the refrigerant pipe housing section 32 formed in the battery frame 27. As a result, the first refrigerant pipe 45 and the second refrigerant pipe 50 can be compactly housed using the battery frame 27. As a result, the space occupied by the first refrigerant pipe 45 and the second refrigerant pipe 50 can be reduced, allowing a large number of battery modules 33 to be mounted on the vehicle body frame 5, thereby increasing the travel distance of the dump truck 1.

Furthermore, according to this configuration, the refrigerant pipe housing section 32 can be formed in the optimal support frame among the first support frame 28, second support frame 29, third support frame 30, and fourth support frame 31 according to the routing path of the first refrigerant pipe 45 and the second refrigerant pipe 50, and the first refrigerant pipe 45 and the second refrigerant pipe 50 can be housed in this refrigerant pipe housing section 32. As a result, the degree of freedom when routing the first refrigerant pipe 45 and the second refrigerant pipe 50 can be increased.

In the embodiment, the first refrigerant pipe 45 and the second refrigerant pipe 50 are each composed of a collection of the plurality pipes (supply side pipes 45A, 45C, 45E, 50A, 50C, 50E, and discharge side pipes 45B, 45D, 45F, 50B, 50D, 50F). The refrigerant pipe housing section 32 houses the plurality pipes (supply side pipes 45A, 45C, 45E, 50A, 50C, 50E, and discharge side pipes 45B, 45D, 45F, 50B, 50D, 50F) arranged in parallel in the horizontal direction. According to this configuration, the vertical space of the refrigerant pipe housing section 32 housing the first refrigerant pipe 45 and the second refrigerant pipe 50 can be reduced. As a result, the overall height dimension of the battery device 26 can be kept small, enhancing the stability of the dump truck 1 during travel.

In the embodiment, the lowermost support frame (first support frame 28) among the plurality support frames constituting the battery frame 27 is positioned at the lowest level and includes the plurality side plates (front side plate 28F, rear side plate 28G, left side plate 28H, right side plate 28J) facing each other horizontally with spacing, a lower plate 28K fixed to the lower ends of the plurality side plates, and an upper plate 28L fixed to the upper ends of the plurality side plates to which the battery module 33 is attached. The refrigerant pipe housing section 32 is constituted by the space surrounded by the plurality side plates. The plurality pipes (supply side pipes 45A, 45C, 45E, 50A, 50C, 50E, and discharge side pipes 45B, 45D, 45F, 50B, 50D, 50F) constituting the first refrigerant pipe 45 and the second refrigerant pipe 50 are inserted through pipe insertion holes 28M, 28N, 28P formed in the side plates (front side plate 28F, left side plate 28H, right side plate 28J) constituting the first support frame 28 and attached to the first support frame 28.

According to this configuration, the first support frame 28 has great rigidity by including front side plate 28F, rear side plate 28G, left side plate 28H, and right side plate 28J facing each other horizontally with spacing. Therefore, even if pipe insertion holes 28M, 28N, 28P are formed in the front side plate 28F, left side plate 28H, and right side plate 28J to insert the plurality supply side and discharge side pipes constituting the first refrigerant pipe 45 and the second refrigerant pipe 50, the strength of the battery frame 27 can be ensured.

In the embodiment, a battery frame 27 with a four-layered support frame having the first support frame 28, second support frame 29, third support frame 30, and fourth support frame 31 is illustrated. However, the present invention is not limited to this and may be configured to use a battery frame with a support frame stacked in two, three, or more than five layers, for example.

Also, in the embodiment, a case where the refrigerant pipe housing section 32 is formed inside the first support frame 28, which is the lowermost support frame of the battery frame 27, is illustrated. However, the present invention is not limited to this and may be configured to form the refrigerant pipe housing section inside any one of the second support frame 29, third support frame 30, fourth support frame 31, or inside two or more of the first support frame 28, second support frame 29, third support frame 30, fourth support frame 31.

Furthermore, in the embodiment, a case where a battery device 26 with a battery frame 27 is mounted on a trolley-type dump truck 1 equipped with a current collector 40 is illustrated. However, the present invention is not limited to this and can be applied to dump trucks not equipped with a current collector 40, for example.

### DESCRIPTION OF REFERENCE NUMERALS

1: Dump truck
3: Front wheel
4: Rear wheel
5: Vehicle body frame
25: Travel electric motor
26: Battery device
27: Battery frame
28: First support frame (lowermost support frame)
29: Second support frame
30: Third support frame
31: Fourth support frame
32: Refrigerant pipe housing section
33: Battery module
45: First refrigerant pipe
45A, 45C, 45E, 50A, 50C, 50E: Supply side pipe
45B, 45D, 45F, 50B, 50D, 50F: Discharge side pipe
50: Second refrigerant pipe

## Claims

1. A dump truck comprising:
a vehicle body frame to which wheels are attached;
an electric motor for driving the wheels;
a battery device mounted on the vehicle body frame to supply power to the electric motor; and
an electrical equipment including a converter arranged on the rear side of the battery device, wherein
the battery device is configured to include a battery frame supported by the vehicle body frame and a battery module attached to the battery frame;
the battery frame is formed with a refrigerant pipe housing section that accommodates a first refrigerant pipe through which the refrigerant for cooling the battery module flows, and a second refrigerant pipe through which the refrigerant for cooling the electrical equipment flows;
the battery frame has a plurality of support frames stacked in multi-stages in the vertical direction, the battery module is attached to each of the plurality of support frames, and the refrigerant pipe housing section is formed in at least one of the plurality of support frames.

2. The dump truck according to claim 1;
the first refrigerant pipe and the second refrigerant pipe are each constituted by an assembly of a plurality pipes;
the refrigerant pipe housing section is formed with the plurality of pipes arranged in parallel in the horizontal direction.

3. The dump truck according to claim 2,
the lowermost support frame, which is positioned at the lowest level among the plurality of support frames constituting the battery frame, has a plurality of side plates facing each other with a gap in the horizontal direction, a lower plate fixed to the lower ends of the plurality of side plates, and an upper plate fixed to the upper ends of the plurality of side plates to which the battery module is attached;
the refrigerant pipe housing section is constituted by a space surrounded by the plurality of side plates;
the plurality of pipes constituting the first refrigerant pipe and the second refrigerant pipe are inserted through pipe insertion holes formed in the side plates constituting the lowermost support frame and are attached to the lowermost support frame.
